# EUROPEAN PATENT APPLICATION

(11) **EP 3 716 361 A1**
(43) Date of publication of application: **30.09.2020**
(21) Application number: 18878494.6
(22) Date of filing: 14.11.2018
(51) Int. Cl.: H01M 2/26, H01M 2/02, H01M 10/058, H01M 10/052

(54) **METAL TAB FOR FLEXIBLE BATTERY**

(30) Priority: 20.11.2017 KR 20170154499
(71) Applicant: Libest Inc., Daejeon 34051 (KR)
(72) Inventor: KIM, Joo Seong, Daejeon 34050 (KR); HA, Jin Hong, Daejeon 35367 (KR); LEE, Gil Ju, Daejeon 34052 (KR)
(74) Representative: Brann AB
(86) International application number: PCT/KR2018/013891
(87) International publication number: WO 2019/098669

(57) **Abstract**

A metal tab included in a lithium secondary battery, wherein the lithium secondary battery includes a first electrode and a second electrode having different polarities with a separator interposed therebetween, and the metal tab is provided only on a first electrode tab protruded and extended from the first electrode, and a current collector of the first electrode has a Young's modulus equal to or less than that of a current collector of the second electrode.

## Description

### TECHNICAL FIELD

The present disclosure relates to a metal tab for flexible battery that can solve a mechanical problem with a battery which may occur in a flexible environment.

### BACKGROUND

A secondary battery refers to a battery which can be charged and discharged, as opposed to a primary battery which cannot be charged, and has been widely used in the field of advanced electronic device fields such as cellular phone, notebook computer, camcorder, and the like. As the portable electronic devices are manufactured lighter with improved performance and the Internet of Things (loT) advances, a lot of studies are being conducted on secondary batteries used as power supplies therefor.

Particularly, a lithium secondary battery has a higher voltage than a nickel-cadmium battery or a nickel-hydrogen battery mainly used as power supplies for portable electronic devices and also has a high energy density per unit weight. Therefore, demand for lithium secondary batteries is on the increase.

The secondary battery utilizes an electrochemical reaction occurring between an electrolyte and a positive electrode and a negative electrode when the positive electrode and the negative electrode are connected to each other while they are inserted into the electrolyte. Unlike conventional primary batteries, the secondary battery is a chargeable and dischargeable battery which can be recharged with energy by a charger and used again when energy is consumed by an electronic device. Therefore, the use of secondary batteries has increased with the popularization of wireless electronic devices.

Typically, a jelly-roll type electrode assembly in which a separator is inserted between a positive electrode and a negative electrode and then spirally wound together, or a flexible stacked type electrode assembly in which multiple positive electrodes and negative electrodes are stacked with a separator interposed therebetween has been used as the lithium secondary battery. For example, a cylindrical battery is manufactured by housing the jelly-roll type electrode assembly in a cylindrical can, injecting an electrolyte thereinto, and sealing the can, and a prismatic battery is manufactured by pressing the jelly-roll type electrode assembly or the stacked type electrode assembly to be flat and housing the flat electrode assembly in a prismatic can. Further, a pouch type battery is manufactured by packing the jelly-roll type electrode assembly or the stacked type electrode assembly together with an electrolyte in a pouch type casing. In such an electrode assembly, a positive electrode tab and a negative electrode tab are withdrawn from a positive electrode and a negative electrode, respectively, to the outside of the electrode assembly and then connected to a positive electrode and a negative electrode of a secondary battery.

Meanwhile, an electrode tab on multiple positive electrodes and negative electrodes stacked in a vertical direction is connected to an electrode lead. A conventional joint structure between an electrode tab and an electrode lead slightly decreases in coherence during direct providing. Thus, when a battery is bent or the like during use, a problem occurs in the joint between the electrode tab and the electrode lead. A pouch type battery will be explained with reference to Korean Patent Laid-open Publication No. 10-2013-0063709 which discloses a pouch type secondary battery in which two electrodes, a separator, and an electrolyte are placed in a pouch and sealed and the pouch includes an inner resin layer, a metal foil layer, and an outer resin layer and a buffer layer having less reactivity than the metal foil layer is formed between the inner resin layer and the metal foil layer. In this case, the buffer layer having less reactivity than the metal foil layer is added, and, thus, even when the inner resin layer is damaged such as micro cracks, the buffer layer can suppress oxidation of the metal foil layer. Therefore, it is possible to suppress corrosion on the outside of the battery. However, metal foil is basically vulnerable to deformation such as wrinkles during bending and thus may cause degradation in the properties of a flexible battery.

According to conventional technologies, when a typical battery assembly is bent, compressive stress is applied to an inner bent portion and tensile stress is applied to the opposite side. Therefore, a casing covering an electrode assembly of the battery is also expanded or contracted, and, thus, mechanical damage occurs locally. Accordingly, a new flexible battery assembly with suitable flexibility is needed.

Further, in a current collector of a typical lithium secondary battery, a path through which electrons generated from an active material can flow to the outside is provided and electrode tabs protruded and extended from electrodes having different polarities are respectively made of metals having different properties. For example, a negative electrode current collector is mainly made of copper. This is because aluminum reacts with lithium to produce an alloy at a negative electrode operating potential. However, copper does not involve in oxidation-reduction reaction at a negative electrode operating potential and thus is stable. Here, a metal current collector made of, *e.g.,* aluminum having a low Young's modulus and a metal current collector made of, e.g., copper having a relatively high Young's modulus are used together. When a battery including components different from each other in elongation and thickness is bent, a technique for effectively minimizing stress is needed. Particularly, a technique for effectively solving the problem caused by a difference in Young's modulus between an electrode and an electrode lead is needed.
Patent Document 1: KR10-2013-0063709 A

### DISCLOSURE OF THE INVENTION

### PROBLEMS TO BE SOLVED BY THE INVENTION

The present disclosure provides a method for solving a mechanical problem with a battery which may occur in a flexible environment.

### MEANS FOR SOLVING THE PROBLEMS

To solve the above-described problem, there is provided a metal tab included in a lithium secondary battery according to an aspect of the present disclosure, and the lithium secondary battery includes a first electrode and a second electrode having different polarities with a separator interposed therebetween, and the metal tab is provided on a first electrode tab protruded and extended from the first electrode, and the first electrode has a Young's modulus equal to or less than that of the second electrode.
when a current collector of the first electrode is made of aluminum, a current collector of the second electrode is made of aluminum or stainless steel.
when a current collector of the first electrode is made of copper, a current collector of the second electrode is made of stainless steel.

A maximum bend angle of the lithium secondary battery bends at an internal angle in the range of from 10° to 180°.

The metal tab is made of a metal having a Young's modulus equal to or greater than that of the current collector of the first electrode and has a thickness from one to five times greater than that of the current collector of the first electrode.

In the lithium secondary battery including a metal tab according to another aspect of the present disclosure, a first electrode lead is provided on the metal tab provided on the first electrode tab, and Young's moduli of the current collector of the first electrode, the metal tab and the first electrode lead satisfy a relationship that a young's modulus of the first electrode lead is equal to or larger than a young's modulus of the metal tab, and the young's modulus of the metal tab is equal to or larger than a young's modulus of the current collector of the first electrode.

If the current collector of the first electrode has a Young's modulus equal to or less than that of a current collector of the second electrode, a second electrode lead joined on a second electrode tab protruded and extended from the second electrode has a bending structure that is bent in an 180° opposite direction toward the outside of an electrode assembly included in the lithium secondary battery in a state where it has been provided on the second electrode tab toward the electrode assembly.

If the current collector of the first electrode has a lower Young's modulus than the current collector of the second electrode, the second electrode lead is provided on the second electrode tab protruded and extended from the second electrode, and Young's moduli of the current collector of the first electrode, the current collector of the second electrode, the metal tab, the first electrode lead and the second electrode lead satisfy a relationship that the a young's modulus of the current collector of the second electrode is equal to or larger than a young's modulus of the first electrode lead, the young's modulus of the first electrode lead is equal to or larger than a young's modulus of the metal tab, the young's modulus of the metal tab is equal to or larger than a young's modulus of the current collector of the first electrode, and the young's modulus of the current collector of the first electrode is equal to or larger than a young's modulus of the second electrode lead.

If the current collector of the first electrode has the same Young's modulus as the first electrode lead, the first electrode lead has a bending structure.

The electrode assembly included in the lithium secondary battery includes a first electrode and a second electrode that have different polarities and are alternately stacked with a separator interposed therebetween, and a pair of outermost electrodes placed on both sides of the electrode assembly includes a first electrode having a single surface coated with an electrode mixture.

A metal tab is provided on at least one of electrode tabs of the pair of outermost electrodes.

The lithium secondary battery includes mixture layers having different polarities and coated on the current collectors of the first and second electrodes, respectively, and electrode tabs not coated with the mixture layers and placed on the current collectors of the first and second electrodes, respectively, and the lithium secondary battery is sealed in a pouch including an electrode lead portion that is provided on the electrode tab and protruded to the outside of the lithium secondary battery to make electrons flow.

### EFFECTS OF THE INVENTION

According to the present disclosure, a metal tab connected to an electrode lead having a greater thickness is used on an electrode having elongation and bendability equal to or lower than predetermined levels. Accordingly, a separation problem between the electrode and the lead caused by a difference in thickness and elongation can be effectively resolved.

### BRIEF DESCRIPTION OF THE DRAWINGS

**FIG. 1** is a perspective view illustrating a structure in which a metal tab is joined onto an electrode tab according to an embodiment of the present disclosure.
**FIG. 2** is a perspective view illustrating that the metal tab has been joined on the electrode tab according to the illustration of **FIG. 1****.**
**FIG. 3** is a perspective view illustrating a structure in which a metal tab is joined onto an electrode tab according to another embodiment of the present disclosure.
**FIG. 4** is a perspective view illustrating a structure in which an electrode lead having a bending structure has been joined on a metal tab according to yet another embodiment of the present disclosure.
**FIG. 5** illustrates a structure in which a current collector of an outermost electrode among electrodes included in an electrode assembly is placed to have a relatively low Young's modulus according to yet another embodiment of the present disclosure.
**FIG. 6** is a graph showing the results of bending tests on a battery having a metal tab according to an embodiment of the present disclosure and a battery without having a metal tab.
**FIG. 7** is a table showing materials and Young's moduli of a metal tab, an electrode and an electrode lead according to an embodiment of the present disclosure.
**FIG. 8** illustrates how to perform a stress test on a metal tab, a current collector of an electrode and an electrode lead according to an embodiment of the present disclosure.
**FIG. 9** and **FIG. 10** are graphs showing the degree of breakage and cutting in a current collector of an electrode, an electrode lead and a tab-lead provided portion based on the stress and displacement measured from each of a metal tab, the current collector of an electrode and the electrode lead which are components of a battery.

### BEST MODE FOR CARRYING OUT THE INVENTION

Hereafter, a flexible battery according to the present disclosure will be described with reference to the accompanying drawings.

The following exemplary embodiments are provided only for understanding of the present disclosure but not intended to limit the right scope of the present disclosure. Therefore, the inventions that perform the same functions in the same scope as the present disclosure are also included in the right scope of the present disclosure.

Hereinafter, some embodiments of the present disclosure will be described in detail with reference to the accompanying drawings. When reference numerals refer to components of each drawing, although the same components are illustrated in different drawings, the same components are referred to by the same reference numerals as possible. Further, if it is considered that description of related known configuration or function may cloud the gist of the present disclosure, the description thereof will be omitted.

Further, in describing components of the present disclosure, terms such as first, second, A, B, (a), (b), etc. can be used. These terms are used only to differentiate the components from other components. Therefore, the nature, order, sequence, etc. of the corresponding components are not limited by these terms. It is to be understood that when one element is referred to as being "connected to" or "coupled to" another element, it may be directly connected or coupled to another element or be connected or coupled to another element, having still another element "connected" or "coupled" therebetween.

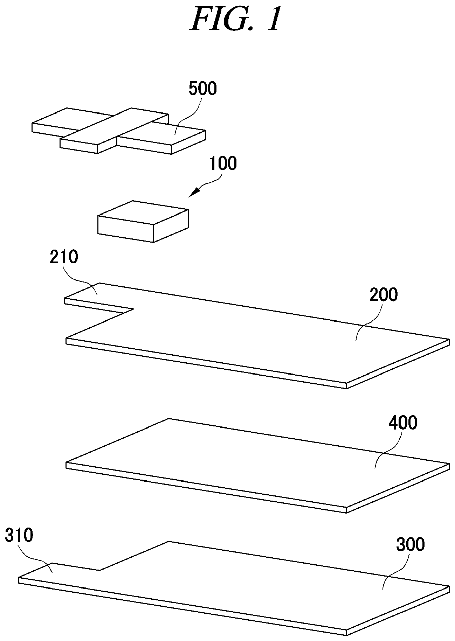

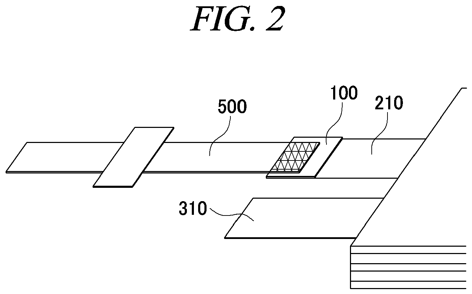

**FIG. 1** is a perspective view illustrating that a metal tab is joined onto an electrode tab according to an embodiment of the present disclosure. **FIG. 2** is a perspective view illustrating that the metal tab has been joined on the electrode tab according to the illustration of **FIG. 1****.**

Referring to **FIG. 1** and **FIG. 2****,** a metal tab 100 according to the present disclosure is used in a lithium secondary battery including a first electrode 200 and a second electrode 300 having different polarities with a separator 400 interposed therebetween. A current collector of the first electrode 200 of the two electrodes has a Young's modulus equal to or lower than that of a current collector of the second electrode 300.

If the current collector of the first electrode 200 has a Young's modulus lower than that of the current collector of the second electrode 300, the current collector of the first electrode 200 may be made of copper and the current collector of the second electrode 300 may be made of stainless steel.

Further, if the current collector of the first electrode 200 has a Young's modulus lower than that of the current collector of the second electrode 300, the current collector of the first electrode 200 may be made of aluminum and the current collector of the second electrode 300 may be made of stainless steel.

Meanwhile, if the current collector of the first electrode 200 has the same Young's modulus as the current collector of the second electrode 300, the current collector of the first electrode 200 may be made of aluminum and the current collector of the second electrode 300 may be made of aluminum.

The metal tab 100 according to the present disclosure is provided and welded on a first electrode tab 210 protruded for electrical connection from the first electrode 200. In an embodiment of the present disclosure, the metal tab 100 is not used in the current collector of the second electrode 300 having a higher Young's modulus than the current collector of the first electrode 200. This is because a separation problem between an electrode lead and an electrode caused by a bending stress occurs mainly in the first electrode 200.

In an embodiment of the present disclosure, a Young's modulus of the metal tab 100 is equal to or greater than that of the current collector of the first electrode 200 but desirably equal to or less than that of an electrode lead 500.

In an embodiment of the present disclosure, the bending stress is controlled by the thickness, and **FIG. 1** illustrates that the metal tab 100 has a thickness from one to five times greater than that of the current collector of the first electrode 200.

This is because if the metal tab 100 having the above-described thickness is joined on the current collector of the first electrode 200, the metal tab 100 can effectively absorb a stress generated when the electrode lead 500 having a high Young's modulus is bent. If the metal tab 100 has a thickness less than one time, a provided portion between the electrode lead 500 and the first electrode tab 210 can be easily cut without the effect of joining the metal tab 100, and if the metal tab 100 has a thickness more than five times, when the metal tab 100 is provided on the electrode tab 210 of the first electrode 200, adhesion decreases, and if the intensity of ultrasonic waves is increased to improve adhesion, the metal tab 100 melts in part and sticks to a horn and an anvil. As such, the difficulty of providing increases and the workability decreases. Also, the quality is not uniform. Further, the electrode tab 210 that is an uncoated portion under a tab-lead provided portion where the electrode lead 500 and the electrode tab of the first electrode 200 are provided can be easily cut during bending.

In an embodiment of the present disclosure, the lithium secondary battery is a flexible lithium secondary battery having bendability, and a maximum bend angle of the lithium secondary battery bends at an internal angle in the range of from 10° to 180°. That is, in the present disclosure, the metal tab 100 is used between the first electrode tab 210 and the electrode lead 500 to resolve a stress problem occurring in a flexible lithium secondary battery and particularly a tear or separation of the thin current collector (*e.g.,* copper) of the first electrode 200 when the thick electrode lead (*e.g.,* nickel) is also bent.

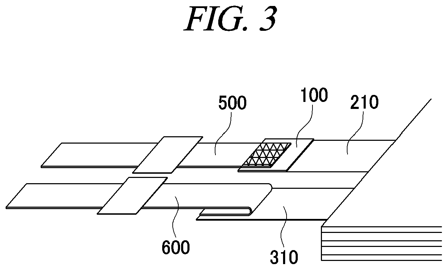

**FIG. 3** is a perspective view illustrating a structure in which a metal tab is joined onto an electrode tab according to another embodiment of the present disclosure.

Referring to **FIG. 3****,** the metal tab 100 according to the present disclosure is used in the lithium secondary battery including the first electrode 200 and the second electrode 300 having different polarities with the separator 400 interposed therebetween, and the current collector of the first electrode 200 has a Young's modulus equal to or less than that of the current collector of the second electrode 300.

A second electrode lead 600 has a bending structure that is bent in an 180° opposite direction toward the outside of an electrode assembly in a state where it has been provided on the second electrode tab 310 protruded for electrical connection from the second electrode 300 toward the electrode assembly.

When the current collector of the first electrode 200 has a Young's modulus less than the current collector of the second electrode 300, the second electrode lead 600 is provided onto the second electrode tab 310; and Young's moduli of the current collector of the first electrode 200, the current collector of the second electrode 300, the metal tab 100, the first electrode lead 500 and the second electrode lead 600 satisfy a relationship that a young's modulus of the second electrode 300 is larger than a young's modulus of the first electrode lead 500, the young's modulus of the first electrode lead 500 is equal to or larger than a young's modulus of the metal tab 100, the young's modulus of the metal tab 100 is equal to or larger than a young's modulus of the first electrode 200, the young's modulus of the first electrode 200 is larger than a young's modulus of the second electrode lead 600.

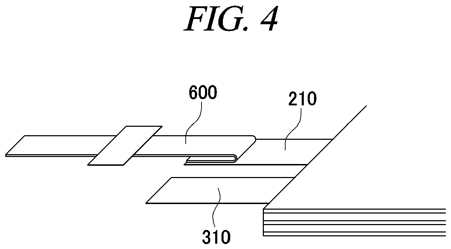

**FIG. 4** is a perspective view illustrating a structure in which an electrode lead having a bending structure has been joined on a metal tab according to yet another embodiment of the present disclosure.

Referring to **FIG. 4****,** when the current collector of the first electrode 200 has the same Young's modulus as the first electrode lead 500, the first electrode lead 500 can also have a bending structure.

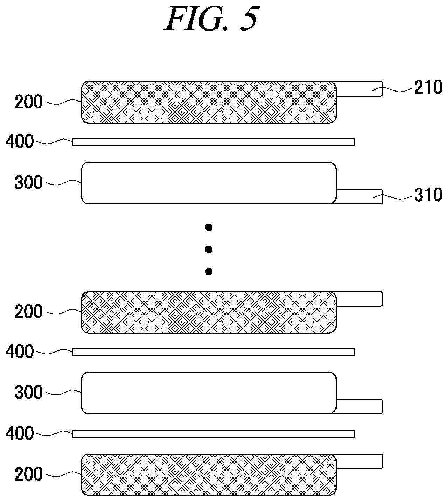

**FIG. 5** illustrates a structure in which a current collector of an outermost electrode among electrodes included in an electrode assembly is placed to have a relatively low Young's modulus according to yet another embodiment of the present disclosure.

The electrode assembly has a structure in which the first electrode 200 and the second electrode 300 have different polarities and are alternately stacked with a separator interposed therebetween.

In this structure, as a pair of outermost electrodes included in the electrode assembly, the first electrode 200 including the current collector having a relatively low Young's modulus may be placed. Each of the pair of outermost electrodes may have a single surface coated with an electrode mixture.

Meanwhile, as for at least any one of the pair of outermost electrodes each including an electrode tab, a metal tab is provided on the electrode tab.

Further, the lithium secondary battery includes mixture layers having different polarities and coated on the current collectors of the first and second electrodes 200 and 300, respectively, and electrode tabs not coated with the mixture layers and placed on the current collectors of the first and second electrodes 200 and 300, respectively, and the lithium secondary battery is sealed in a pouch including an electrode lead portion that is provided on the electrode tab and protruded to the outside of the lithium secondary battery to make electrons flow.

Hereinafter, Young's modulus applied to the present disclosure will be described.

A material having a high Young's modulus is somewhat stiff and highly resistant to deformation and thus has solidity and low flexibility.

A material having a low Young's modulus is very soft and less resistance to deformation and thus has fragility and high flexibility. Therefore, when a battery is bent by an external force, cutting of an outermost electrode less occurs.

Meanwhile, if the thickness is too thin, the breakage may easily occur. Therefore, an appropriate thickness needs to be applied. Further, when an external force is applied to electrodes made of different materials from each other and alternately stacked, an electrode having a relatively low Young's modulus is selectively broken first, and, thus, an appropriate Young's modulus needs to be found in consideration of thickness to secure flexibility.

Further, for example, as for copper (Cu) and stainless steel (SUS), SUS is more expensive than Cu, and, thus, it is efficient to apply Cu to outermost electrodes including a relatively large number of electrodes and reduce manufacturing costs.

Also, the outermost electrodes do not contribute to the capacity of the battery but take up a thickness and thus cause a decrease in energy density. Therefore, desirably, an electrode mixture is coated on a single surface.

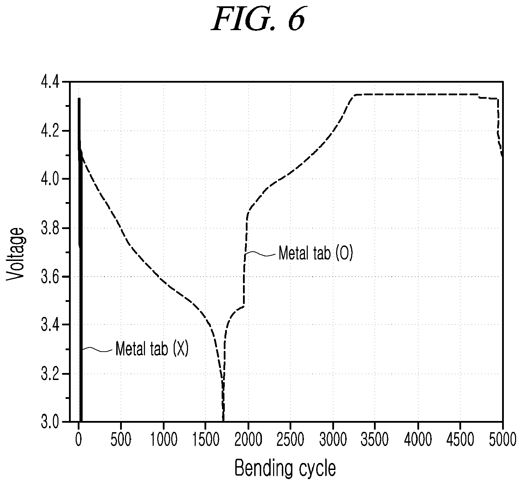

**FIG. 6** is a graph showing the results of bending tests on a battery having a metal tab according to an embodiment of the present disclosure and a battery without having a metal tab.

Referring to **FIG. 6**, a charge/discharge test and a bending test are performed at the same time. As a result thereof, an electrode and a lead in the conventional battery without having the metal tab 100 are broken before bending 30 times and the battery having the metal tab 100 can perform a normal electrochemical operation even after bending 5000 times.

In many cases, a conventional lithium secondary battery is easily cut at a terminal portion by an external impact or force and thus sharply decreases in capacity and cannot function as a battery.

However, by understanding the characteristics of the materials of the components, such as the metal tab 100, the electrodes 200 and 300 and the electrode leads 500 and 600, included in the battery and improving the structure, it is possible to enhance the durability of an electrode at a terminal portion of the lithium secondary battery where breakage and cutting occurs most easily due to bending and distortion which is a repeatedly applied force from the outside.

In the present disclosure, a simple process of providing (spot providing, ultrasonic providing, laser providing, joining with conductive adhesive, etc.) the small metal tab 100 on an electrode tab based on the first electrode 200 and the second electrode 300 having different polarities has a great effect on the flexibility of the terminal portion.

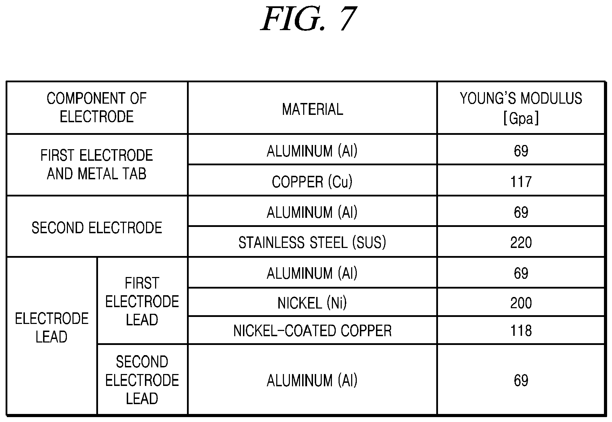

**FIG. 7** is a table showing materials and Young's moduli of a metal tab, an electrode and an electrode lead according to an embodiment of the present disclosure.

As illustrated in **FIG. 7**, if an embodiment is prepared using the first electrode 200 as a negative electrode and the second electrode 300 as a positive electrode, the components can be assorted by setting Young's moduli using aluminum, copper, stainless steel and nickel as the materials.

Meanwhile, Young's modulus is a coefficient indicating how much a relative length of an elastic object is changed by an external force (stress). This is not relevant to the shape of the object but only relevant to the material of the object.

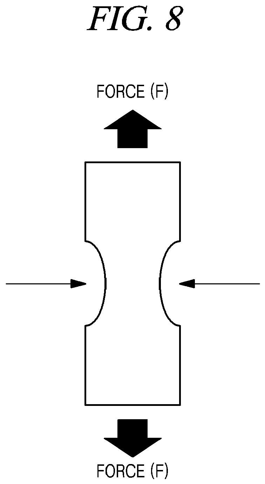

**FIG. 8** illustrates to perform a stress test on a metal tab, a current collector of an electrode and an electrode lead according to an embodiment of the present disclosure. Referring to **FIG. 8**, in a stress test on the battery having the metal tab 100, when force is applied to both ends of the battery, the battery material gradually decreases in the cross-sectional area and then is cut. In this case, the battery material generates an internal force resistant to the pulling force from the outside, and the stress is defined by dividing the resistant force by the cross-sectional area.

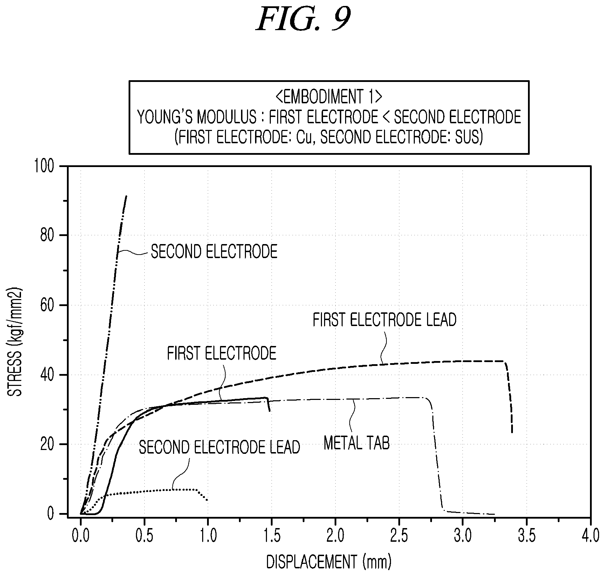

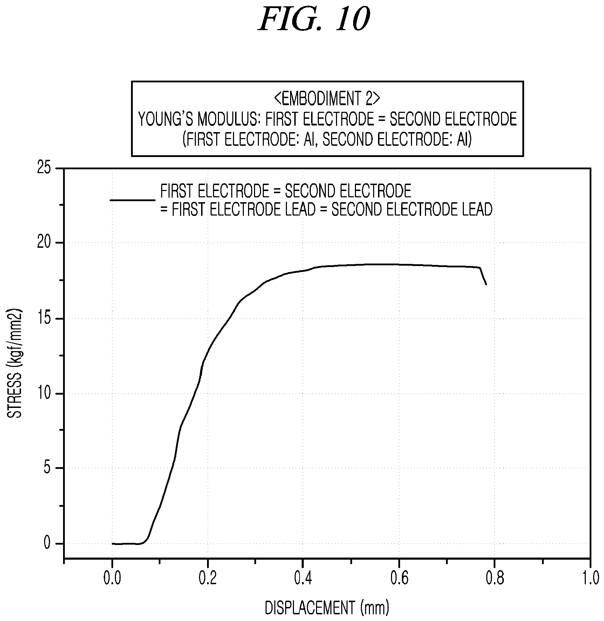

**FIG. 9** and **FIG. 10** are graphs showing the degree of breakage and cutting in a current collector of an electrode, an electrode lead and a tab-lead provided portion based on the stress and displacement measured from each of a metal tab, the current collector of an electrode and the electrode lead which are components of a battery as a result of the stress test performed as illustrated in **FIG. 8****.**

**FIG. 9** is a graph showing the stress and displacement just before the current collectors of the respective electrodes, the metal tab 100, the first electrode lead 500 and the second electrode lead 600 are broken and cut in an embodiment in which the current collector of the first electrode 200 is made of copper, the current collector of the second electrode 300 is made of stainless steel, the current collector of the first electrode 200 has a lower Young's modulus than the current collector of the second electrode 300. As for the current collector of the first electrode 200 which is made of copper, it continues to stretch at a stress of about 30 kgf/mm² and is cut at a displacement of about 1.5 mm. As for the current collector of the second electrode 300 which is made of stainless steel, unlike copper, it tends to be highly resistant to the pulling force from the outside rather than be stretched.

**FIG. 10** shows the relationship between the stress and displacement in another embodiment in which the current collector of the first electrode, the current collector of the second electrode, the first electrode lead and the second electrode lead are made of aluminum.

Therefore, by using the metal tab 100 for reinforcement and the tab of the bending structure and applying appropriate Young's moduli and thicknesses to the electrode current collectors of the respective electrodes, it is possible to improve a weak portion which can be easily broken by an external force and secure the flexibility of the battery.

## Claims

1. A metal tab included in a lithium secondary battery,
wherein the lithium secondary battery includes a first electrode, a second electrode and a separator interposed therebetween, and the metal tab is provided on a first electrode tab connected with the first electrode, and
a current collector of the first electrode has a Young's modulus equal to or less than that of a current collector of the second electrode.

2. The metal tab of Claim 1,
wherein when the current collector of the first electrode is made of aluminum, the current collector of the second electrode is made of aluminum or stainless steel.

3. The metal tab of Claim 1,
wherein when the current collector of the first electrode is made of copper, the current collector of the second electrode is made of stainless steel.

4. The metal tab of Claim 1,
wherein a bend angle of the lithium secondary battery bends at an internal angle in the range of from 10° to 180°.

5. The metal tab of Claim 1,
wherein the metal tab is made of a metal having a Young's modulus equal to or greater than that of the current collector of the first electrode and has a thickness equal to or greater than that of the current collector of the first electrode.

6. The metal tab of any one of Claim 1 to Claim 5,
wherein in the lithium secondary battery,
a first electrode lead is provided on the metal tab, and
Young's moduli of the current collector of the first electrode, the metal tab and the first electrode lead satisfy a relationship that a young's modulus of the first electrode lead is equal to or larger than a young's modulus of the metal tab, and the young's modulus of the metal tab is equal to or larger than a young's modulus of the current collector of the first electrode.

7. The metal tab of Claim 1,
wherein a second electrode lead provided on a second electrode tab connected with the second electrode has a bending structure.

8. The metal tab of Claim 1,
wherein a second electrode lead is provided on a second electrode tab protruded and extended from the second electrode, and
Young's moduli of the current collector of the first electrode, the current collector of the second electrode, the metal tab, the first electrode lead and the second electrode lead satisfy a relationship that the a young's modulus of the current collector of the second electrode is equal to or larger than a young's modulus of the first electrode lead, the young's modulus of the first electrode lead is equal to or larger than a young's modulus of the metal tab, the young's modulus of the metal tab is equal to or larger than a young's modulus of the current collector of the first electrode, and the young's modulus of the current collector of the first electrode is equal to or larger than a young's modulus of the second electrode lead.

9. The metal tab of Claim 1,
wherein if the current collector of the first electrode has the same Young's modulus as a first electrode lead, the first electrode lead has a bending structure.

10. The metal tab of Claim 1,
wherein an electrode assembly included in the lithium secondary battery includes a first electrode and a second electrode alternately stacked with a separator interposed therebetween, and
a pair of outermost electrodes placed on both sides of the electrode assembly includes a first electrode coated with an electrode mixture.

11. The metal tab of Claim 10,
wherein a metal tab is provided on at least one of electrode tabs of the pair of outermost electrodes.

12. The metal tab of Claim 6,
wherein the lithium secondary battery includes mixture layers coated on the current collectors of the first and second electrodes, respectively, and electrode tabs not coated with the mixture layers and placed on the current collectors of the first and second electrodes, respectively, and
the lithium secondary battery is sealed in a pouch including an electrode lead portion that is formed on the electrode tab and protruded to the outside of the lithium secondary battery.
